# EUROPEAN PATENT APPLICATION

(11) **EP 1 288 811 A1**
(43) Date of publication of application: **05.03.2003**
(21) Application number: 02018259.8
(22) Date of filing: 22.08.2002
(51) Int. Cl.: G06F 17/60

(54) **Order management method and system for supplies**

(30) Priority: 29.08.2001 JP 2001259612
(71) Applicant: Kabushiki Kaisha Toyota Jidoshokki, Kariya-shi, Aichi-ken (JP)
(72) Inventor: Mitsuoka, Minoru, Kariya-shi, Aichi-ken (JP); Kimata, Takeyasu, Kariya-shi, Aichi-ken (JP)
(74) Representative: HOFFMANN - EITLE

(57) **Abstract**

A supply master memory (18) records identification information and inventory information of supplies. A machine specification master memory (19) records identification information of machines. The machine specification master memory (19) also records identification information and the quantities of supplies used in the machines. A user machine specification memory (21) records identification information and the quantities of the machines used by the user. The user machine specification memory (21) also records identification information of supplies used in the user's machines in relation to user identification information. An administration server (11) receives requests for retrieval of supplies from a user terminal (12) through the Internet (INT). In response to such a request, the administration server (11) retrieves a supply based on the identification information of the supply, which is recorded in a user machine specification memory (20). Then, the administration server (11) sends the retrieval result to the user terminal (12) in a form that allows the user to place an order.

## Description

### BACKGROUND OF THE INVENTION

The present invention relates to an order management method and system for supplies, which method and system uses an administration server of the party of a manufacture, which sells supplies of machines, to take orders of supplies from a user terminal through a computer network.

A typical manufacturer that manufactures and sells products such as machines also sells supplies for the machines to users of the machines. For example, the manufacturer sells such as parts used in the machines and consumable items.

When selling machines, a manufacturer party determines the product numbers and needed quantities of necessary supplies for the machines using a prior art order management system for supplies. The manufacturer then sells the supplies to the user. When the machine breaks down or when the supplies are consumed, the user needs to replace the supplies. If the user party has the supplies in stock, the user takes the supplies out of storage and uses them. If the user party has no or few supplies in stock, the user places an order with the manufacturer for necessary supplies.

First, the user places a provisional order by telephone, facsimile or e-mail. When receiving the provisional order, the manufacturer confirms the product numbers of the supplies and estimates the cost. The manufacturer then informs the user of the estimated cost by telephone, facsimile or e-mail. The user checks the estimated cost and places a formal order. If the manufacturer has the ordered supplies in stock, the manufacturer takes the supplies out of stock and ships the supplies to the user. If the manufacturer does not have ordered supplies in stock, the manufacturer manufactures the supplies and ships them to the user. The user uses or stocks the received supplies. The manufacturer demands payment and the user pays.

However, in the prior art order management system, the user needs to find the product numbers of the needed supplies by referring to a catalog. This process is complicated and troublesome for the user. Particularly, when the manufacture party sells a great number of types of supplies or when the user owns several models of machines, it is further troublesome for the user to determine the needed supplies.

Also, even if the manufacturer discontinues production of a supply of a specific product number and starts manufacturing a substitute item having a different product number, the user may place an order using the product number of the old item. In this case, the manufacture party has difficulty identifying the product number. Further, in the above prior art order management system, since information regarding the delivery time of the supplies is not integrated, the manufacturer cannot quickly respond to inquiries regarding the delivery time from users. Since even the manufacturer cannot easily identify the product numbers of the supplies, the manufacturer cannot prepare cost estimate in short time when requested by a user.

Accordingly, it is an objective of the present invention to provide an order management method and system for supplies, which method and system facilitate specifying product numbers of supplies when receiving orders of supplies. Another objective of the present invention is to provide an order management method and system for supplies, which method and system allow a manufacturer to quickly respond to inquiry regarding delivery time and cost estimate from users.

To achieve the foregoing and other objectives and in accordance with the purpose of the present invention, a supply order management method. An administration server of a machine manufacturer party, which sells supplies for machines, receives orders of the supplies from a user terminal through a computer network. The method includes the following steps: a step in which the administration server records identification information and inventory information of the supplies in a supply mastery memory; a step in which the administration server records identification information of the machines, identification information of supplies used in the machines, and the quantity of the supplies in a machine specification master memory; a step in which the administration server records identification information of a machine of the user, the quantity of the machine of the user, identification information of the supplies used in the machine of the user in a user machine specification memory in relation to a user identification information; a step in which, in response to a supply retrieval request from the user terminal, the administration server retrieves a supply based on the identification information of the supply recorded in the user machine specification memory; and a step in which the administration server sends the retrieval result to the user terminal to permit the user to order the supply.

The present invention may also be embodied as a supply order management system. An administration server of a machine manufacturer party, which sells supplies for machines, receives orders of the supplies from a user terminal through a computer network. The server includes a supply master memory, a machine specification master memory, and a user machine specification memory. The supply master memory records identification information and inventory information of the supplies. The machine specification master memory records identification information of the machines, identification information of supplies used in the machines, and the quantity of the supplies. The user machine specification memory records identification information of a machine of the user, the quantity of the machine of the user, identification information of the supplies used in the machine of the user in relation to a user identification information, the system. In response to a supply retrieval request from the user terminal, the administration server retrieves a supply based on the identification information of the supply recorded in the user machine specification memory. The administration server sends the retrieval result to the user terminal to permit the user to order the supply.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a diagram illustrating an order management system according to one embodiment of the present invention;
Fig. 2 is a diagram illustrating the structure of data recorded in memories of the administration server of the system shown in Fig. 1;
Fig. 3 is a diagram showing a procedure executed by the system of Fig. 1;
Fig. 4 is a diagram showing a procedure executed by the system of Fig. 1;
Fig. 5 is a diagram showing a menu panel of the control system shown in Fig. 1;
Fig. 6 is a diagram showing a user authentication panel of the control system shown in Fig. 1;
Fig. 7 is a diagram showing a specified search panel of the control system shown in Fig. 1;
Fig. 8 is a diagram showing a general search panel of the control system shown in Fig. 1;
Fig. 9 is diagram showing an image search panel of the control system shown in Fig. 1;
Figs. 10(a) and 10(b) are diagrams showing a search result panel of the control system shown in Fig. 1;
Fig. 11 is a diagram showing a purchase history panel of the control system shown in Fig. 1; and
Fig. 12 is a diagram showing a cost estimate panel of the control system shown in Fig. 1.

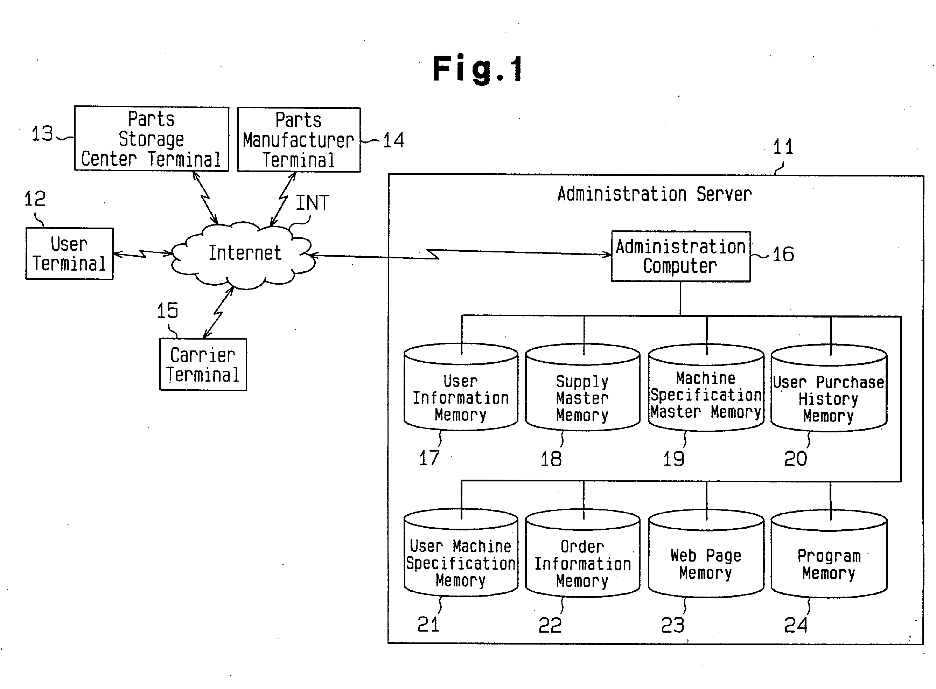

A supply order management system according to a first embodiment of the present invention will now be described with reference to Figs. 1 to 12.

Fig. 1 is a diagram showing the entire structure of the supply order management system. As shown in Fig. 1, an administration server 11 controlled by a manufacturer party includes an administration computer 16. The administration computer 16 is connected to a user terminal 12, a parts storage center terminal 13, a parts manufacturer terminal 14, a carrier terminal 15 through a computer network, which is the Internet INT in this embodiment. Each of the user terminal 12, the parts storage center terminal 13, the parts manufacturer terminal 14, and the carrier terminal 15 is a computer. The computer of each terminal has memory that stores a viewer software for browsing web pages made with hypertext language (HTML). The computer also has a receiving device for receiving data sent through the Internet INT and a monitor device for displaying the received web pages.

The administration server 11 administrates data regarding supplies sold by the manufacturer party and data regarding users. The administration server 11 also provides the user with information regarding the supplies. The user accesses the administration server 11 from the user terminal 12 through the Internet INT and views the information regarding the supplies. The user can place orders for necessary supplies based on the viewed information.

The administration computer 16 in the administration server 11 includes a central processing unit (CPU), a random access memory (RAM), a read only memory (ROM), a monitor device, and an input device (none of which is shown), and executes various programs. The computer 16 is connected to a user information memory 17, a supply master memory 18, a machine specification master memory 19, a user purchase history memory 20, a user machine specification memory 21, an order information memory 22, a web page memory 23, and a program memory 24. The administration computer 16 uses secure sockets layer (SSL) as a communication protocol for safely communicating with the terminals 12 through 15. Using SSL, the computer 16 authenticates the user and encrypts data.

The user uses the user terminal 12 for retrieving supplies, requesting cost estimates, and placing orders. The parts storage center terminal 13 is used at a parts storage center, where the manufacturer or a commissioned dealer stores supplies. The parts storage center terminal 13 stores data regarding the quantities of the supplies stocked at the storage center. The parts manufacturer terminal 14 is used by a parts manufacturer, which manufactures supplies at a request of the manufacturer. The parts manufacturer terminal 14 stores the quantities of the supplies stored at the parts manufacturer, delivery time and the progress of manufacturing of the supplies. The carrier terminal 15 is used by a carrier that transports supplies to the user at request of the manufacturer. In Fig. 1, the number of each of the user terminal 12, the parts storage center terminal 13, the parts manufacturer terminal 14, and the carrier terminal 15 is one. However, the number of the terminals 12 through 15 may be more than one.

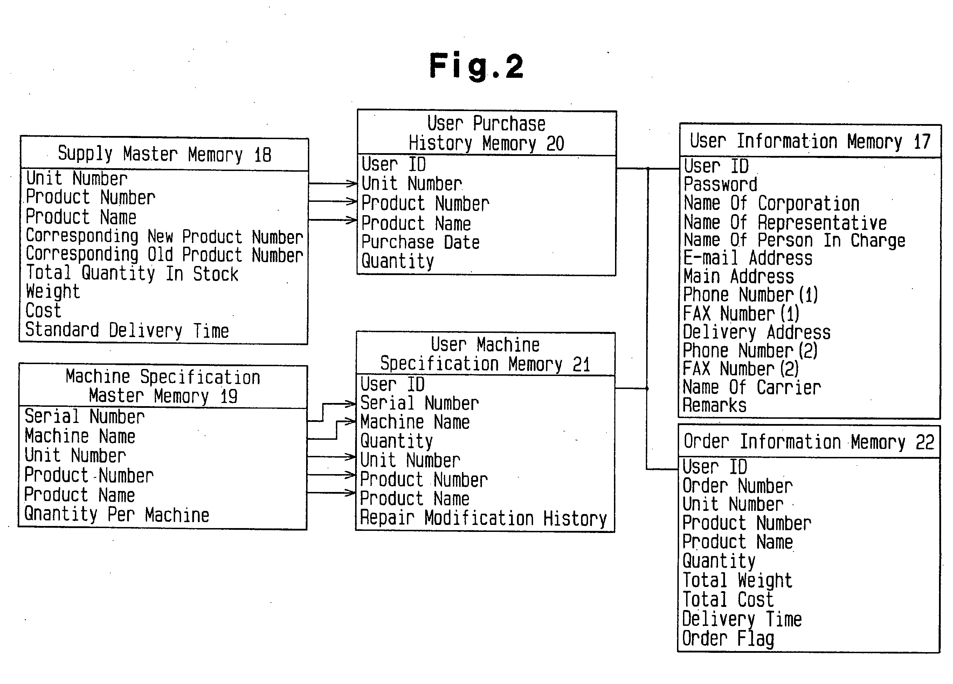

The structure of data stored in the memories 17 through 24 of the administration server 11 will now be described with reference to Figs. 1 and 2.

The user information memory 17 stores information of each user. The user information includes a user ID consisting of user identification information, a password related to the user ID, the name of the company of the user, the name of representative, the name of the person in charge, the e-mail address, the main address, the telephone number (1) related to the main address, the facsimile number (1) related to the main address, the address to which delivery is made, the telephone number (2) related to the delivery address, the facsimile number (2) related to the delivery address, and remarks on the user. The telephone numbers and the facsimile numbers are stored for each of the main address and the delivery address because, in general, the address to which bills are to be sent is different from the address to which the supplies are to be delivered. In the carrier name section, the name of the carrier appointed by the user is stored. The remarks on the user, for example, include information regarding each user such as the regular holidays of the user, and the settling day of the user.

The supply master memory 18 stores information regarding supplies sold by the manufacturer. Specifically, the master memory 18 stores information for each supply. The supply information includes the product number. The supply information also includes the unit number, the name of the product, the product number of a related new product, the product number of a related old product, the total quantity of the supply, the weight, the price, and standard delivery time, which are. related to the product number. The unit number refers to an identifier for identifying each unit when a machine is divided into several units. In this embodiment, the unit number is three digit sign like E20 or F15. The unit number is used to roughly determine the part of the machine to which each supply is applied. The product number and the name of the product are the number and the name assigned to each supply. In this embodiment, the product number and the product name are represented by signs and names such as J123-0011 and cam. The unit number, the product number, and the product name form the identification information of each supply.

The corresponding new product number and the corresponding old product number are numbers of a new product and an old product that are compatible with each supply. The total quantity refers to the quantity of the supplies stored at the party of the machine manufacturer party (including the parts storage center and the parts manufacturer). The weight refers to the weight of each supply and is used for computing the cost of transportation. The cost refers to a unit price of the supply. The standard delivery time refers to a standard time taken for a supply to be taken out of storage at the machine manufacturer or the parts manufacturer, to be packed, and to be transported by the carrier to the user. If the machine manufacturer is based in Japan, the standard delivery time varies depending of where the user is located. For example, the standard delivery time varies among users in Asia, Europe, North America, and South America.

The machine specification master memory 19 stores information for each of several machines sold by the machine manufacturer. The machine information includes the serial number, the name of the machine, and information regarding the supplies used in the machine. The serial number is an identifier assigned to each type of machine. The serial number and the machine name form identification information of the machine. The information regarding the supplies used in the machine includes the identification information of the supplies, that is, the unit numbers, the product numbers, and the product names, and the numbers of the supplies used in a single machine. The information of each type of the supplies used in a single machine is stored.

The user purchase history memory 20 stores information regarding each set of the same supply that was purchased in one occasion. The information stored in the user purchase history memory 20 includes the user identification. The information stored in the user purchase history memory 20 also includes unit numbers, product numbers, product names, dates of purchase, and quantities of purchased products, which are related to the user identification. The unit numbers, the product numbers and the product names are retrieved from the supply master memory 18 and are stored in the user purchase history memory 20. The purchase dates and the quantities of the purchased products represent the dates on which the user purchased the products and the quantities of the purchased products.

The user machine specification memory 21 stores the identification information of each model of the machines used by the user. The user machine specification memory 21 stores the user identification. The user machine specification memory 21 also stores the serial numbers, the name of the machines, the quantities of the machines, the unit numbers, the product numbers, the product names, and the history of repairs and modifications, which are related to the user identification. The serial numbers, the product names, the quantities of the products, the unit numbers, the product numbers, and the product names are retrieved from the machine specification master memory 19 and are stored in the user machine specification memory 21. The repair modification history is used for storing the records of repairs and modifications to the machines used by the user. If a machine is repaired or modified, the product number and the product name of the machine are changed accordingly.

The order information memory 22 stores information of each order of supplies placed by the user. The information includes the user ID. The information also includes the order numbers, the unit numbers, the product numbers, the product names, the quantities of the ordered products, the total weight, the total cost, the delivery time, and an order flag, which are related to the user ID. The order number is an identifier assigned to one order. The order number is referred to as an estimation number until an order is settled. The unit number, the product number, the product name, and the quantity are recorded for each type of supplies ordered by the user. The weight of each supply is recorded in the supply master memory 18 based on the product number. The total weight is computed by multiplying the weight of each supply with the quantity of the ordered supplies. The supply master memory 18 stores the price of each supply. The total cost is the sum of the product of the price of the supply and the quantity, the transportation charge according to the total weight, and the tax. The delivery time is the longest standard delivery time of the ordered products. The order flag is an identifier showing whether an order is settled. When an order is settled, the order flag is set to one. In the other cases, the order flag is set to zero.

The web page memory 23 stores files of web pages made with hypertext type language (HTML).

The program memory 24 stores various programs for executing the supply order management system of the present embodiment. The programs include a search program, an estimate drafting program, a data communication program, a mail communication program, and a progress reference program.

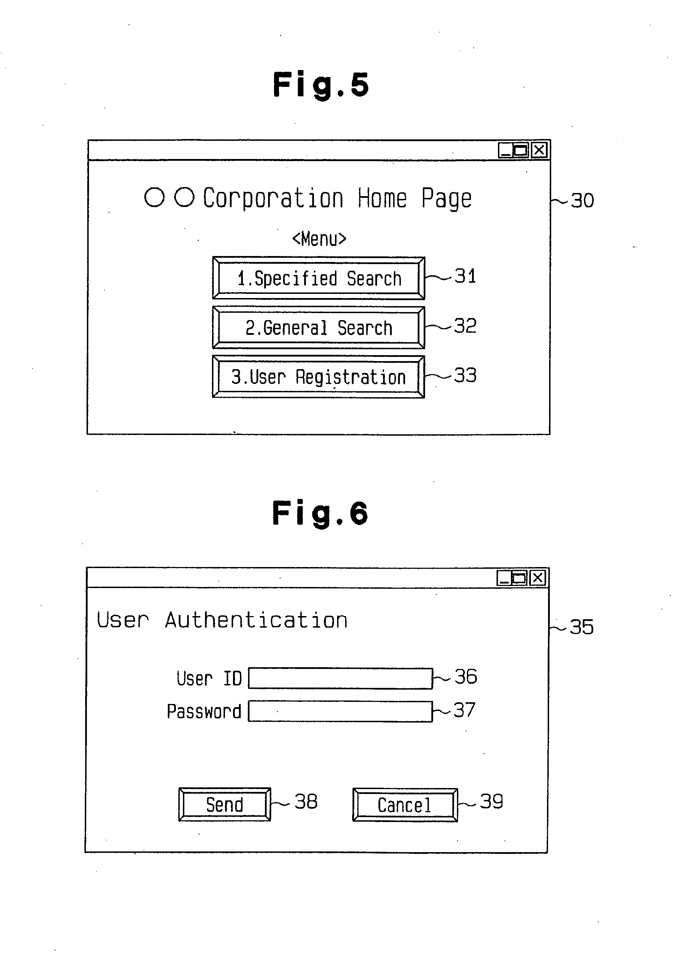

Referring to Figs. 5 to 12, the panels of a browser shown in the monitor device of the user terminal 12 will be described.

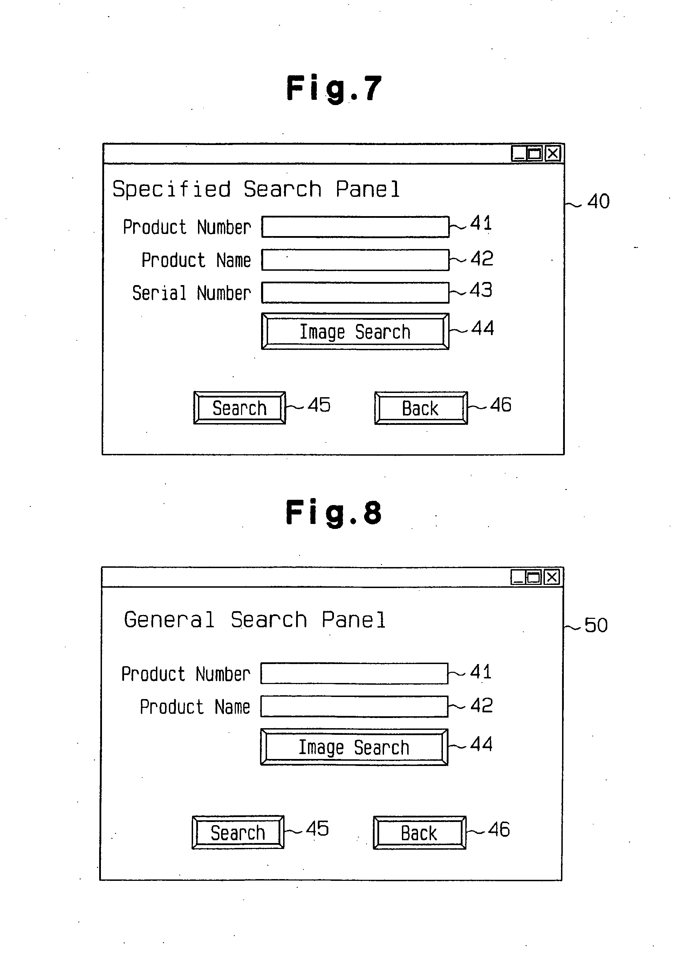

Fig. 5 is a menu panel 30, which is displayed when the user terminal 12 sends a request for sending a web page to the administration server 11. The menu panel 30 includes a specified search button 31, a general search button 32, and a user registration button 33. When the user presses the user registration button 33, a registration panel (not shown) is displayed. The registration panel permits the user to input items to be recorded in the user information memory 17. When the user inputs the necessary information such as the user ID and the password to the registration panel and the input items are sent from the user terminal 12 to the administration server 11, the data is recorded in the user information memory 17. The user registration is thus completed. When the user presses the specified search button 31 or the general search button 32, a user authentication panel 35 of Fig. 6 is displayed. The user authentication panel 35 displays a user ID input box 36, a password input box 37, a send button 38, and a cancel button 39. When the user inputs the correct user ID and the correct password, and presses the send button 38, the specified search panel or the general search panel, which are shown in Figs. 7 and 8, is displayed.

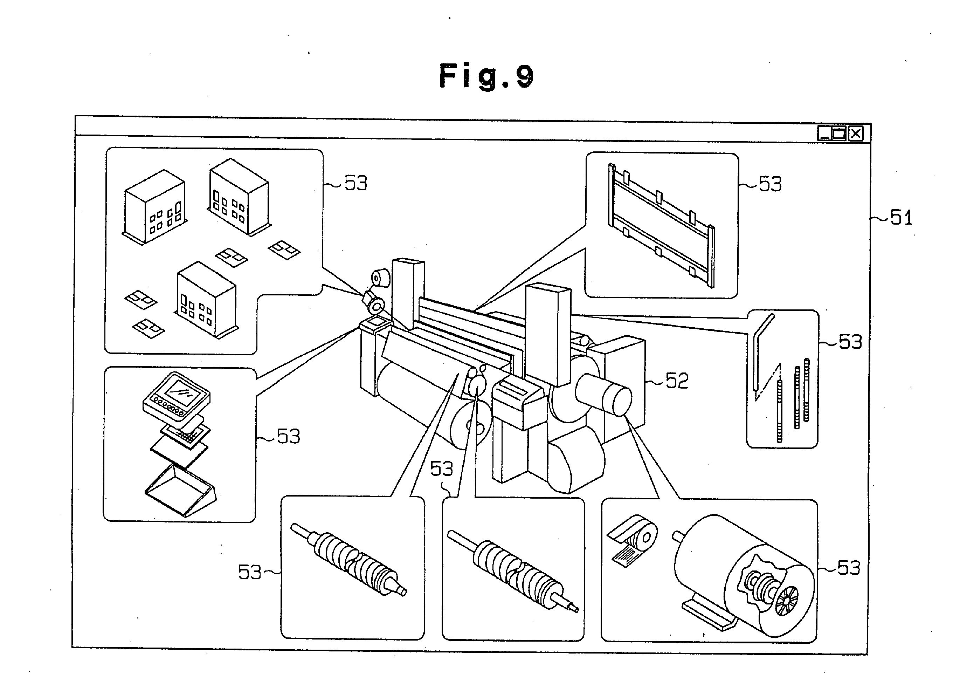

A specified search panel 40 shown in Fig. 7 is used for conducting a search in a range of the supplies used in a machine of the user. Therefore, the subject of the search is the product numbers recorded in the user machine specification memory 21. The specified search panel 40 shows a product number input box 41, a product name box 42, a serial number box 43, an image search button 44, a search start button 45, and a back button 46. When the user inputs necessary items in the product number box 41 and the product name box 42 or in the serial number box 43 and presses the search start button 45, a search is started. The general search panel 50 shown in Fig. 8 is used for conducting a search the subject of which is not limited to the machines of the user. That is, the subject of the search conducted with the general search panel 50 is all of the supplies sold by the manufacturer. The general search panel 50 is the same as the specified search panel 40 except that the general search panel 50 does not have the serial number box 43. When the user presses the image search button 44 on the specified search panel 40 or on the general search panel 50, an image search panel 51 shown in Fig. 9 is displayed.

The image search panel 51 shows a general view 52 of a machine. The general view 52 has sections each of which corresponds to one of the unit numbers. When the user moves the mouse-cursor to any of the sections, a corresponding supply image 53 appears on the image search panel 51. If the user clicks the mouse at any of the supply image 53, the list of the supplies corresponding to the unit is shown.

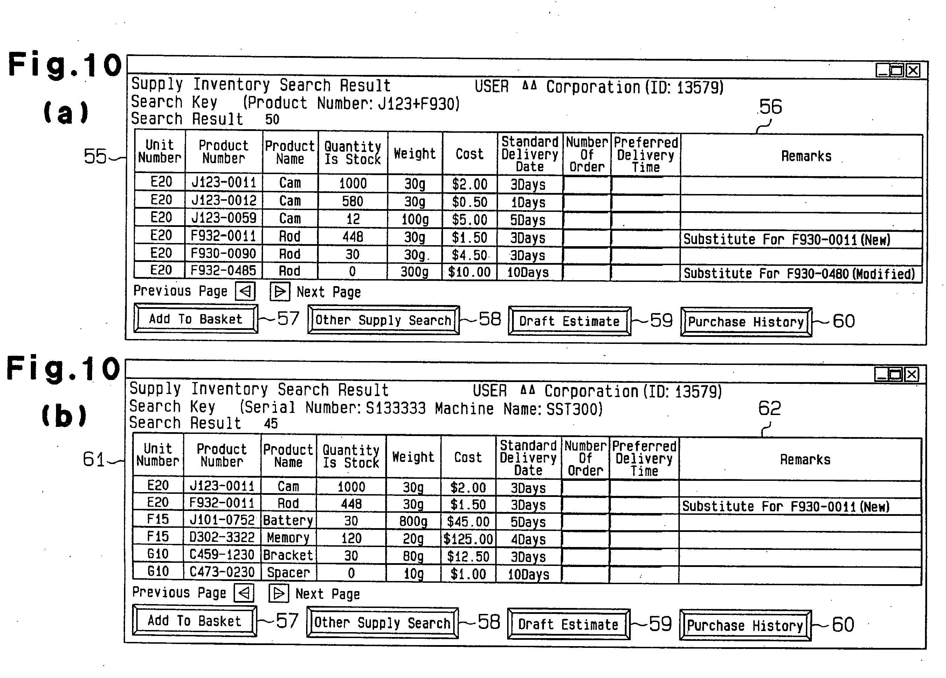

When the user conducts a search for supplies, supply inventory search panels 55, 61 shown in Figs. 10(a) and 10(b) are displayed. The panel 55 of Fig. 10(a) shows the result of a search for product numbers including J123 or F930. The information representing the user is shown as ΔΔ corporation (the user ID 13579). In this example, there are fifty search results. The search result list is spread over for several pages. By pressing "Previous Page" button and "Next Page" button, the page can be moved backwards and forwards. The specified search result is shown in a search result list 56. The list 56 includes the unit number, the product number, the product name, the stocked quantity, the weight, the cost, the standard delivery time, and the remarks for each supply. The remarks section includes information of the substitute supply that includes the corresponding new and old product numbers recorded in the supply master memory 18, and changes of the product numbers recorded in the repair and modification history data recorded in the user machine specification memory 21. Therefore, even if the search was conducted for F930, the numbers F932-0011 and F932-0485 are displayed as the search results. This is because the supply F932-0011, F932-0485 can be used as substitutes for the products F930-0011 and F930-0485. After reviewing the results, the user inputs a desired quantities and delivery date in the quantity box and the delivery time box on the search result list 56. The user places an order or requests the manufacturer to draft an estimate. Also, the supply inventory search panel 61 shown in Fig. 10(b) shows the result of a search for the serial number S133333, which corresponds to a product name SST300. In this example, all the supplies that have the serial number S133333 are retrieved and the number of the results is forty-five.

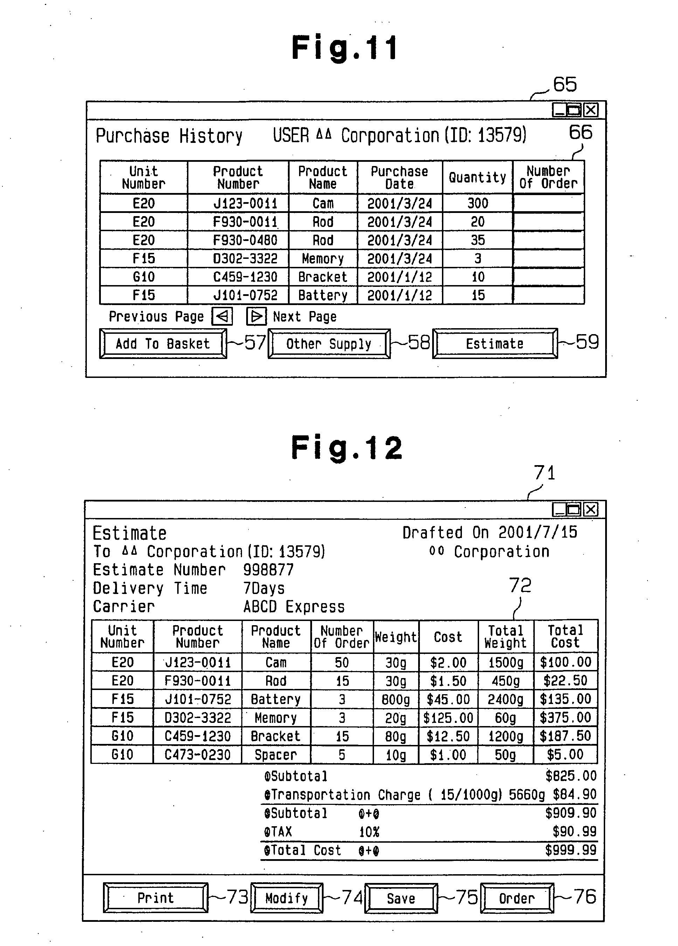

Each of the search result panels 55, 61 has "Add to Basket" button 57, "Search Other Supplies" button, "Request for Estimate" button 59, "Purchase History" button 60. The "Add to Basket" button 57 is used for recording a provisional order of an item the ordering quantity of which is determined in the order information memory 22. At the state of the provisional order, the order flag is zero. The "Other Supply Search" button 58 is used for clearing the current search results and start searching for other supplies. When the "Purchase History" button 60 is pressed, a purchase history panel 65 shown in Fig. 11 is displayed. The purchase history panel 66 shows a purchase history list 66, which includes the unit numbers, the product numbers, the product names, the dates of purchases, and the quantities of purchased items. After inputting the desired quantities of supplies in the ordering quantity box, the user can place an order or request for an estimate. The purchase history panel 65 also has the "Add to Basket" button 57, the "Other Supply Search" button, and the "Request for Estimate" button 59.

When the "Request for Estimate" button 59 is pressed, an estimate panel 71 shown in Fig. 12 is displayed. The estimate panel 71 shows the name of the user that requested for the estimate, an estimate number (for example 998877) assigned to each estimate request, a delivery time (for example seven days), a carrier (for example, ABCD Express). An estimate result list 72 includes the unit number, the product number, the product name, the ordering quantities, the weight, the cost, the total weight, and the total cost for each item. The estimate is formed with a format that does not allow the user to change through the user terminal 12. For example, the estimate is formed as a PDF file. The estimate panel 71 shows subtotals, transportation charge, tax, and the total costs. The estimate panel 71 has "Print Estimate" button 73, "Modify" button 74, "Save" button 75, and "Order" button 76. The "Print Estimate" button 73 is used for printing the estimate. The "Modify" button 74 is used to return to the screen previous of the estimate panel 71 to allow the user to select the type of supply and to change the quantity of order. The contents of the estimate cannot be freely tampered using the "Modify" button 74. The "Save" button 75 is used for storing the quote in the memory of the user terminal 12. The "Order" button 76 is used for showing that the user has agreed to the estimate. Pressing the "Order" button 76 completes the order.

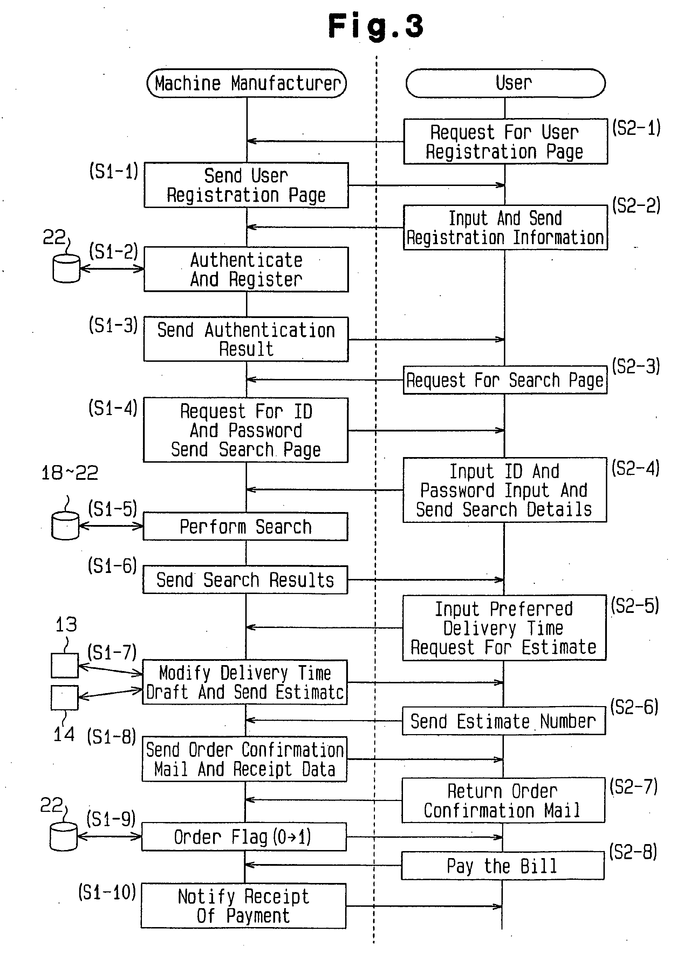

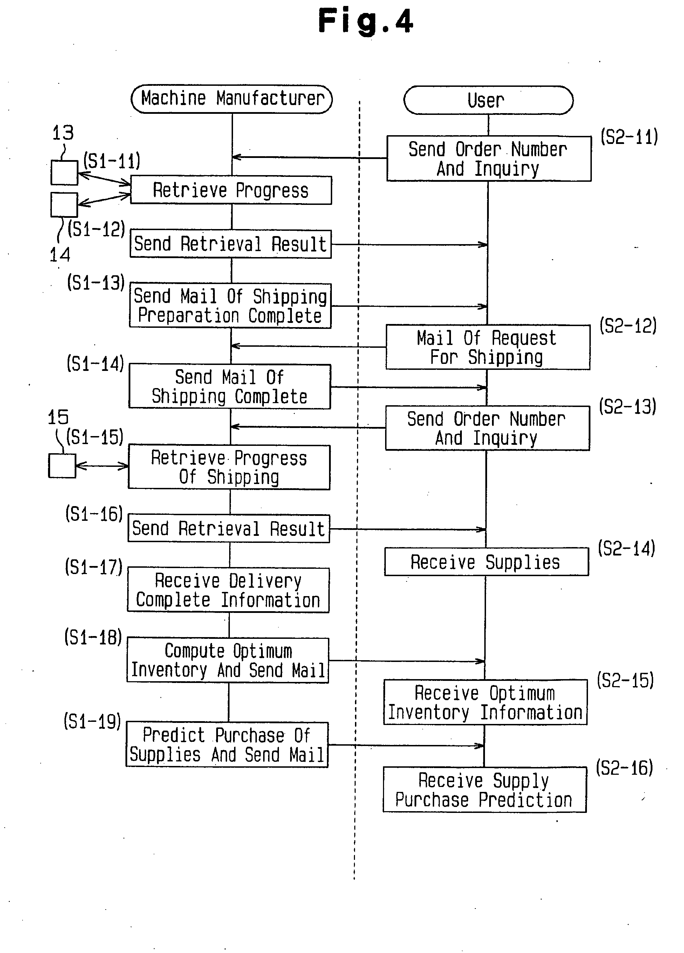

The procedure for receiving an order using the supply order management system according to this embodiment will now be described with reference to Figs. 3 and 4.

### (1. User registration and authentication)

A user who has not registered himself at the administration server 11 of the machine manufacturer requests the manufacturer to send a registration page from the user terminal 12 through the Internet INT as shown in Fig. 3. In this embodiment, SSL is used as the security protocol. When requesting for the registration page, the user requests for a transaction under SSL to the administration server 11 via the browser of the user terminal 12. The administration server 11 and the user terminal 12 establish a high security communication protocol with the encryption and the authentication of SSL. The subsequent processes are performed under SSL.

In step S1-1, the administration server 11 sends the user registration panel to the user terminal 12.

In step S2-2, the user inputs and sends registration information through the user terminal 12.

In step S1-2, the administration server 11 authenticates the user registration and records the registration in the order information memory 22. In step S1-3, the administration server 11 notifies the user terminal 12 of the authentication result.

### (2. Supply Search)

When searching supplies, the user requests the administration server 11 to send a search panel from the user terminal 12.

In step S1-4, the administration server 11 requests for the user ID and the password. If the user ID and the password are properly input at the user terminal 12, the administration server 11 sends the specified search panel 40 and the general search panel 50. In step 2-4, the user fills out the search panels 40, 50 displayed on the user terminal 12, and then sends the panels 40, 50 to the administration server 11. In step 1-5, the administration server 11 performs search through the memories 18 to 22. In step S1-6, the administration server 11 notifies the user of the search result by the supply inventory search result panels 55, 61.

### (3. Estimate, Order, Payment)

In step S2-5, the user inputs the ordering quantities, and a preferred delivery time in the supply inventory search panel 55, 61 and presses the "Request for Estimate" button 59. As a result, a request for an estimate is generated in the administration server 11. In step S1-7, the administration server 11 refers to the data of the inventory state of the supplies recorded in the parts storage center terminal 13 and the parts manufacturer terminal 14, thereby judging whether the requested delivery time needs to be changed. If the delivery time can be shortened or needs to be extended, the administration server 11 renews the delivery time in the order information memory 22. The administration server 11 drafts the estimate panel 71 and sends to the user terminal 12, accordingly.

In step S2-6, the user prints the estimate panel 71 and reviews the estimate. If the user agrees to the estimate, the user places an order by pressing the "Order" button 76 or by sending the estimate number. In step S1-8, the administration server 11 sends data of an order confirmation mail and a receipt to the user terminal 12. In step S2-7, the user confirms the order and returns a mail from the user terminal 12. In step S1-9 the administration server 11 confirms the order and sets the order flag from zero to one. Accordingly, the administration server 11 copies the contents of the order information memory 22 to the user purchase history memory 20 and records the copied information. Thus, information is added to the purchase history of the user. In step S2-8, the user pays the bill with a credit card, a cash transfer, electronic cash. In step S1-10, the administration server 11 notifies the user terminal 12 of the receipt of the payment.

### (4. Retrieval for Progress, Shipping, Reception)

When the user wishes to retrieve the progress of the delivery, the user makes an inquiry in step S2-11 of Fig. 4 by inputting the order number, or the estimate number before the order is settled. In step S1-11, the administration server 11 retrieves the progress by referring to, for example, data of the inventory of the supplies in the storage center terminal 13 or the parts manufacturer terminal 14. In step S1-12, the administration server 11 informs the user terminal 12 of the retrieval result. When the preparation of shipping of the ordered products at the party of the machine manufacturer is completed, the administration server 11 sends a mail for informing the completion of the shipping to the user terminal 12. When agreeing to the mail of step S1-13, the user sends a mail to instruct to ship to the administration server 11 through the user terminal 12. Then, in step S1-14, the administration server 11 sends an information mail to notify the user of shipping.

When the user wishes to retrieve the progress of shipping, the user inputs the order number to the user terminal 12 in step S2-13 to make an inquiry. In step S1-15 the administration server 11 retrieves the progress of shipping by referring to, for example, shipping progress data in the carrier terminal 15. In step S1-16, the administration server 11 sends the retrieval results to the user terminal 12. In step S2-14, the user receives the ordered supplies from the carrier. In step S1-17, the machine manufacturer party receives information about the completion of delivery from the carrier and terminates the series of the procedures.

### (5. Computation of Optimum Inventory and Prediction of Supply Purchases)

The supply order management system of this embodiment records the purchase history of the user by the user purchase history memory 20 shown in Fig. 1. When the predetermined amount of the purchase history is recorded, the administration server 11 computes the optimum inventory. For example, suppose that standard order interval of a certain supply is set at five months. In this case, the administration server 11 determines whether any of the order of the supplies is made in an interval shorter than five months in step S1-18. If there is an interval shorter than five months, the administration server 11 computes the quantity of the supply in stock that is appropriate for an order interval shorter than five months. Then, the machine manufacturer makes a list for each of the detected supplies and sends the list to the user terminal 12 from the administration server 11. Next time, the user can place an order factoring the appropriate quantity of the stocked supplies.

Based on the information stored in the user purchase history memory 20, time at which the user is expected to purchase the supply can be predicted, and a mail may be sent to the user, accordingly (step S1-19). In other words, the user can place an order after receiving a notice (step S2-16).

The supply order management system of this embodiment has the following advantages.

The system uses the Internet INT to allow the user to retrieve information regarding the supplies of the machine manufacturer. Since the user uses the specified search panel 40 or the general search panel 50 depending on the purpose, the system is useful. Particularly, the subjects of the search using the specified search panel 40 are the supplies that are related to the user. The specified search panel 40 therefore permits the user to accurately and quickly obtain information regarding needed supplies.

The supply inventory search result panels 55, 61 each have the order quantity box and the preferred delivery time box. This allows the user to speedily request the manufacturer to draft an estimate or to speedily place an order based on the result of the search.

The user purchase history memory 20 stores the product numbers and the product names of the supplies that were purchased by the user as the purchase history information in relation to the user ID. The purchase history information is shown in the purchase history panel 65 on the user terminal 12. Thus, the user can place orders while referring to the orders in the past. Particularly, the order quantity box of the purchase history panel 65 allows the user to speedily request for an estimate or to place an order.

The supply inventory search panels 55, 61 each show information of compatible products and information of repair and modification in the remark sections. Therefore, if the production of a supply of a certain product number is discontinued, the user can easily finds a substitute.

Since the supply master memory 18 stores the standard delivery time for supplies, the user readily obtains information of the standard delivery time for each supply. When the user requests for retrieval of two or more supplies through the user terminal 12, the longest delivery time is set to the delivery time for the order. Therefore, even if the accurate delivery time is unknown, the user obtains information regarding the standard delivery time. When the user inputs a preferred delivery time through the user terminal 12, a modified delivery time is computed by referring to the inventory information of the parts storage center terminal 13 and the inventory information of the parts manufacturer terminal 14. The computed delivery time is recorded in the order information memory 22 as an order delivery data. Thus, the machine manufacturer notifies the user of the accurate delivery time.

The administration server 11 drafts an estimate and sends it to the user terminal 12. Therefore, the estimate is speedily sent to the user. The user then refers to the estimate. If the user accepts the estimate, the user presses the "Order" button 76, thereby speedily placing an order to the manufacturer.

The estimate is made in a format that cannot be modified through the user terminal 12. This prevents the estimates drafted by the machine manufacturer party from being tampered with.

The image search panel 51 enables the user to easily determine the needed supplies. Therefore, when using the image search panel 51, the user can visually search for the products to be ordered. This permits the user to conduct a search effectively without having to consider the unit number.

The user can search for the progress of shipping and the state of delivery. Thus, the user can track the progress of the supply.

The optimum stock number information and the purchase prediction are computed based on information stored in the user purchase history memory 20. Therefore, if the user continues to use the system, the user effectively controls the inventory and purchases the supplies.

The above embodiment may be modified as follows.

In the illustrated embodiment, the machine manufacturer and the user perform ordering, shipping, billing, and payment. Part of the procedures performed by the manufacturer or the user may be outsourced to an affiliated company or an agency. In this specification, the manufacturer party and the user party include not only the manufacturer and the user but also affiliated companies and the agencies.

The administration server 11 and the terminals 12 to 15 may be any of laptop personal computers, hand held terminals, and mobile phones.

The supply inventory retrieval panels 55, 61 may show image information. This modification offers a panel that is easy to search.

In the illustrated embodiment, the data and the programs are stored in the memories 17 to 24 of the administration server 11. Some or all of the memories 17 through 24 may be located outside of the administration server 11. Also, as long as the same effects are obtained, some or all of the memories 17 through 24 may be integrated.

The specified search panel 40 and the general search panel 50 each may have boxes for inputting unit numbers and prices. In this case, when the search start button 45 is pressed, search is conducted in the memories 17 to 22 for each product. Alternatively, each of the search panels 40, 50 may have only one box that allows search of any of the unit number, the product number, the product name, the type of product, and the price.

Therefore, the present examples and embodiments are to be considered as illustrative and not restrictive and the invention is not to be limited to the details given herein, but may be modified within the scope and equivalence of the appended claims.

## Claims

1. A supply order management method, wherein an administration server of a machine manufacturer party, which sells supplies for machines, receives orders of the supplies from a user terminal through a computer network, the method being **characterized by**:
a step in which the administration server records identification information and inventory information of the supplies in a supply master memory;
a step in which the administration server records identification information of the machines, identification information of supplies used in the machines, and the quantity of the supplies in a machine specification master memory;
a step in which the administration server records identification information of a machine of the user, the quantity of the machine of the user, identification information of the supplies used in the machine of the user in a user machine specification memory in relation to a user identification information;
a step in which, in response to a supply retrieval request from the user terminal, the administration server retrieves a supply based on the identification information of the supply recorded in the user machine specification memory; and
a step in which the administration server sends the retrieval result to the user terminal to permit the user to order the supply.

2. The method according to claim 1, **characterized by** a step in which, when receiving an order for a supply from the user terminal, the administration server records the identification information and the quantity of the ordered supply in an order information memory.

3. The method according to claim 1 or 2, **characterized by:**
a step in which the administration server records identification information of supplies that were purchased by the user in the past in a user purchase history memory as purchase history information in relation to the user identification information; and
a step in which the administration server sends the purchase history information recorded in the user purchase history memory to the user terminal such that the purchase history information can be referred on the user terminal.

4. The method according to any one of claims 1 to 3, **characterized by** a step in which, if there is a substitute that is compatible with a supply recorded in the supply master memory, the administration server records identification information of the substitute in the supply master memory in relation to the corresponding supply.

5. The method according any one of claims 1 to 4, **characterized by:**
a step in which the administration server records standard delivery times of the supplies in the supply master memory in relation to the identification information of the supplies;
a step in which, when receiving a request for retrieval of supplies of a plurality of types from the user terminal, the administration server selects the longest standard delivery time from the standard delivery times of the requested supplies, and records the selected standard delivery time in an order information memory as the delivery time for the order; and
a step in which, when a preferred delivery time is inputted through the user terminal, the administration server computes a corrected delivery time by referring to at least the inventory information of the supplies recorded in the supply master memory, and wherein the administration server records the corrected delivery time in the order information memory as the order delivery time.

6. The method according to any one of claims 1 to 5, **characterized by**:
a step in which the administration server records the costs of the supplies in the supply master memory;
a step in which the administration server drafts an estimate of a supply selected by the user terminal based on the costs of the supplies recorded in the supply master memory; and
a step in which the administration server sends the estimate to the user terminal.

7. The method according to claim 6, **characterized in that** the estimate is drafted in a format that cannot be modified by the user terminal.

8. A supply order management system, wherein an administration server of a machine manufacturer party, which sells supplies for machines, receives orders of the supplies from a user terminal through a computer network, the system **being characterized in that** the server includes:
a supply master memory for recording identification information and inventory information of the supplies;
a machine specification master memory for recording identification information of the machines, identification information of supplies used in the machines, and the quantity of the supplies; and
a user machine specification memory for recording identification information of a machine of the user, the quantity of the machine of the user, identification information of the supplies used in the machine of the user in relation to a user identification information, the system,
wherein, in response to a supply retrieval request from the user terminal, the administration server retrieves a supply based on the identification information of the supply recorded in the user machine specification memory, and wherein the administration server sends the retrieval result to the user terminal to permit the user to order the supply.

9. The system according to claim 8, **characterized in that** the administration server further includes an order information memory, wherein, when the administration server receives an order for a supply from the user terminal, the order information memory records the identification information and the quantity of the ordered supply.

10. The system according to claim 8 or 9, **characterized in that** the administration server further includes a user purchase history memory for recording identification information of supplies that were purchased by the user in the past as purchase history information in relation to the user identification information, wherein the administration server sends the purchase history information recorded in the user purchase history memory to the user terminal such that the purchase history information can be referred on the user terminal.

11. The system according to any one of claims 8 to 10, **characterized in that**, if there is a substitute that is compatible with a supply recorded in the supply master memory, the administration server records identification information of the substitute in the supply master memory in relation to the corresponding supply.

12. The system according any one of claims 8 to 11, **characterized in that** the administration server further includes an order information memory, wherein the administration server records standard delivery times of the supplies in the supply master memory in relation to the identification information of the supplies, wherein, when receiving a request for retrieval of supplies of a plurality of types from the user terminal, the administration server selects the longest standard delivery time from the standard delivery times of the requested supplies, and records the selected standard delivery time in the order information memory as the delivery time for the order, wherein, when a preferred delivery time is inputted through the user terminal, the administration server computes a corrected delivery time by referring to at least the inventory information of the supplies recorded in the supply master memory, and wherein the administration server records the corrected delivery time in the order information memory as the order delivery time.

13. The system according to any one of claims 8 to 10, **characterized in that** the administration server records the costs of the supplies in the supply master memory, wherein the administration server drafts an estimate of a supply selected by the user terminal based on the costs of the supplies recorded in the supply master memory, and wherein the administration server sends the estimate to the user terminal.

14. The system according to claim 13, **characterized in that** the estimate is drafted in a format that cannot be modified by the user terminal.

15. A program for performing the steps of any one of claims 1 to 7.
